Europäisches Patentamt

European Patent Office

Office européen des brevets

(11) Numéro de publication: **0 230 388**
**A1**

(12) **DEMANDE DE BREVET EUROPEEN**

(21) Numéro de dépôt: 87400027.6

(22) Date de dépôt: 08.01.87

(51) Int. Cl.⁴: **A 61 D 7/02**, B 29 C 57/10, B 29 C 45/14

(30) Priorité: **10.01.86 FR 8600273**

(43) Date de publication de la demande: **29.07.87**
**Bulletin 87/31**

(84) Etats contractants désignés: **AT BE CH DE ES GB GR IT LI LU NL SE**

(71) Demandeur: **Cassou, Robert, Rue Clémenceau, F-61300 L'Aigle (FR)**
Demandeur: **Cassou, Bertrand, Saint Symphorien des Bruyeres, F-61300 L'Aigle (FR)**
Demandeur: **Cassou, Maurice, Rue Clémenceau, F-61300 L'Aigle (FR)**

(72) Inventeur: **Cassou, Robert, Rue Clémenceau, F-61300 L'Aigle (FR)**
Inventeur: **Cassou, Bertrand, Saint Symphorien des Bruyeres, F-61300 L'Aigle (FR)**
Inventeur: **Cassou, Maurice, Rue Clémenceau, F-61300 L'Aigle (FR)**

(74) Mandataire: **Rodhain, Claude et al, Cabinet Claude Rodhain 30, rue la Boétie, F-75008 Paris (FR)**

(54) **Procédé d'obturation de l'extrémité d'une paillette et appareil pour sa mise en oeuvre.**

(57) L'invention concerne un procédé d'obturation de la deuxième extrémité (14) d'une paillette (6) contenant un élément ou substance biologique et dont une première extrémité est obturée.

On injecte dans ladite extrémité (14) de la paillette (6), à l'état pâteux et sous pression, une dose de matière thermofusible présentant des propriétés adhésives avec celles constituant la paillette, ladite dose formant en se solidifiant un bouchon hermétique stable notamment aux basses températures.

L'invention concerne également un appareil pour la mise en œuvre du procédé ci-dessus.

L'invention s'applique aux paillettes utilisées en insémination artificielle.

"Procédé d'obturation de l'extrémité d'une paillette et appareil pour sa mise en oeuvre".

La présente invention concerne les paillettes, c'est-à-dire des tubes longs et fins qui sont utilisés en particulier dans les techniques d'insémination artificielle. Ces tubes sont bouchés à une de leurs extrémités et on rempli ensuite la paillette en y introduisant un élément ou une substance biologique telle que de la semence animale, un embryon ou même des virus. On obtient donc des paillettes qui sont bouchées de manière hermétique à une de leurs extrémités et qui sont remplies avec l'élément ou la substance biologique désiré et il faut ensuite procéder à l'obturation de la deuxième extrémité. Les paillettes sont alors prêtes pour l'utilisation et elles sont alors conservées à très basse température, par exemple dans de l'azote liquide.

Cette opération d'obturation s'effectue actuellement soit par soudage à ultrasons soit par soudure à chaud en utilisant une colle polyvinylique en poudre. Ces techniques connues peuvent entraîner des détériorations du produit contenu dans la paillettes; ainsi la chaleur nécessaire à la soudure peut modifier ce produit. La technique de fermeture par soudure aux ultrasons permet d'éviter cette émission de chaleur mais les vibrations créées entraînent cependant des détériorations du produit. Ainsi, par exemple dans le cas d'embryons, ces derniers sont coincés dans la paillette entre deux bulles d'air qui permettent d'éviter l'éclatement de l'embryon lors de la décongélation et les ultrasons utilisés lors de la soudure désagrègent ces bulles d'air.

La présente invention a donc pour objet un procédé d'obturation de la deuxième extrémité d'une paillette qui permet d'obtenir un bouchon hermétique qui est stable en particulier aux basses températures de conservation sans créer de détériorations ni même de modifications du produit contenu dans la paillette.

Selon l'invention, on injecte dans la deuxième extrémité de la paillette, à l'état pâteux et sous pression, une dose de matière thermofusible présentant des propriétés adhésives avec celles constituant la paillette, ladite dose formant, en se solidifiant, un bouchon hermétique stable notamment aux basses températures.

Ce mode d'obturation n'exige qu'une opération de compression sur le produit placé dans la paillette, compression qui est absorbée en particulier par l'air se trouvant à l'entrée de la paillette et qui se trouve donc comprimé entre le bouchon qui se forme et le produit; ceci améliore la fixation de ce dernier et en particulier des bulles d'air dans le cas d'une paillette contenant un embryon. La matière thermofusible adhère parfaitement aux parois de la paillette qui sont ramollies du fait de la température de ladite matière fondue qui se solidifie aussitôt pour former un bouchon étanche qui résiste en particulier aux très basses températures de congélation. Cette technique permet en plus d'annuler les effets néfastes d'éventuels dépôts polluants de surface. Enfin, la température de fusion de la matière thermofusible étant généralement supérieure à 100°, il s'y ajoute un effet stérilisant utile.

Avantageusement, dans le cas d'une paillette en chlorure de polyvinyl , de préférence de qualité alimentaire, on utilise comme matière thermofusible une colle constituée par un mélange de copolymère éthylène-vinyl-acétate et d'une polyoléfine. Les caractéristiques et le point de fusion de cette colle sont particulièrement adaptés au chlorure de polyvinyl. Cette colle est utilisée comme colle thermofusible dans des pistolets appropriés et se présente sous la forme de bâtonnets semi-rigides.

La présente invention a également pour objet un appareil pour la mise en oeuvre du procédé ci-dessus; cette appareil est notamment remarquable en ce qu'il comprend :

- un manchon-réservoir cylindrique destiné à recevoir un bâtonnet de matière thermofusible ou un ensemble de bâtonnets disposés en alignement axial;

- des moyens de pression agissant sur l'extrémité arrière dudit bâtonnet ou de l'ensemble de bâtonnets,

- des moyens de chauffage agissant sur l'extrémité avant du bâtonnet ou de l'ensemble de bâtonnets, et

- des moyens de guidage et de réception de l'extrémité de la paillette à obturer, lesdits moyens étant mobiles en translation selon l'axe du ou des bâtonnets entre deux positions, une position opérationnelle où l'extrémité à obturer de la paillette est en communication avec le bâtonnet et une position de repos où ladite communication est interrompue.

Lorsqu'on amène ledit appareil en position opérationnelle, la matière thermofusible du bâtonnet est en communication avec l'extrémité de la paillette et est injectée dans cette dernière sous pression, ladite pression étant créée par les moyens de pression précités; lorsque l'on ramène l'appareil en position de repos, la communication avec la paillette

4          0230388

est interrompue et la dose de matière thermofusible injectée dans la paillette se solidifie en formant un bouchon hermétique.

On voit que cet appareil est de structure très simple et qu'il ne nécessite pas de source d'énergie particulière; l'opération d'obturation se fait par voie mécanique de telle sorte qu'elle peut être faite facilement par une personne non qualifiée.

L'appareil peut comporter des moyens de chauffage autonomes tels qu'un dispositif de chauffage fonctionnant à l'alcool du type chauffe-plat; on peut également prévoir une résistance électrique alimentée par une source autonome d'énergie électrique telle qu'une pile ou un accumulateur.

Avantageusement, on prévoit un manchon de liaison présentant un orifice de passage en forme d'entonnoir et disposé entre le manchon réservoir et les moyens de chauffage. Ce manchon permet d'adapter la section de l'extrémité avant du bâtonnet de matière thermofusible tout en augmentant la pression à cette extrémité.

Selon une autre caractéristique de l'invention, l'appareil comporte une soupape à canal central aligné avec la paillette et réalisant la communication avec l'extrémité avant du bâtonnet lorsque l'appareil est en position opérationnelle. Avantageusement ladite soupape comporte une extrémité en forme de pointe, pénétrant dans la face frontale avant du bâtonnet au niveau de l'élément chauffant, et un canal axial central débouchant dans un siège destiné à recevoir l'extrémité à obturer de la paillette et communiquant latéralement avec le batonnet de matière thermofusible, ladite soupape coulissant dans un manchon guide recevant l'extrémité avant dudit bâtonnet.

La forme en pointe de l'extrémité de ladite soupape facilite sa pénétration dans la matière thermofusible fondue lorsque l'on met l'appareil en position opérationnelle et le coulissement de la soupape permet de dégager l'ouverture latérale du canal axial. Avantageusement, ce manchon guide porte les moyens de chauffage précité. Selon un mode de réalisation, les moyens de pression sont constitués par un piston qui est soumis à l'action d'un ressort; cette structure est particulièrement simple à réaliser.

D'autres caractéristiques et avantages de l'invention ressortiront de la description qui suit ainsi que des dessins ci-annexés sur lesquels :

- la Fig . 1 représente schématiquement en coupe un appareil selon l'invention en position de repos, et

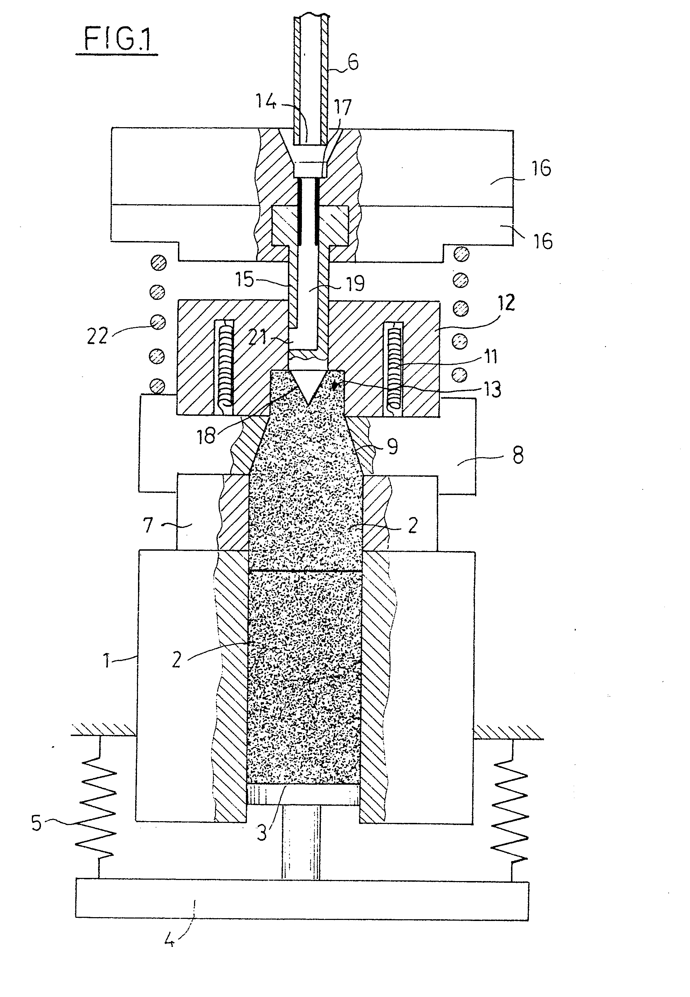

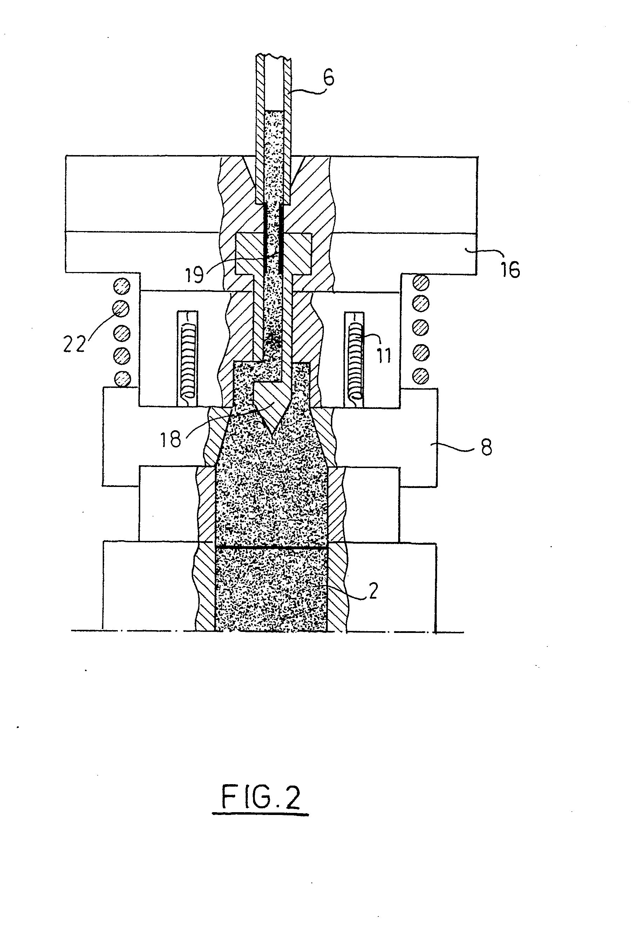

- la Fig.2 est une vue partielle correspondant à la figure 1 du même appareil en position opérationnelle.

Le procédé d'obturation selon l'invention consiste essentiellement à réaliser le moulage d'une matière thermofusible au moyen des parois de la paillette sans amener de déformation du profil de cette dernière ce qui est particulièrement important pour l'utilisation de ces paillettes, par exemple dans des machines automatiques. L'invention consiste à réaliser un bouchon en matière thermofusible, cette matière étant injectée à l'état pâteux et sous pression dans l'extrémité du tube constituant la paillette. Ladite matière est rendue pâteuse par chauffage et elle est choisie de manière à présenter de bonnes propriétés adhésives avec la matière qui constitue les parois internes de la paillette, de manière à bien adhérer sur celle-ci avant de se solidifier en formant un bouchon parfaitement étanche. La chaleur venant de l'intérieur de la paillette et étant relativement faible, il ne s'ensuit pas de déformation du profil extérieur de la paillette au niveau de l'extrémité considérée.

Ce bouchon fait par exemple 3 à 5 mm de longueur, ce qui est suffisant pour réaliser une étanchéité parfaite pour des diamètres de paillettes pouvant aller jusqu'à 6 mm; la matière thermofusible utilisée est choisie de manière à pouvoir résister à des pressions élevées pouvant régner autour de la paillette lors de son utilisation postérieure; cette matière thermofusible est également choisie pour résister aux traitement de congélation et de décongélation sans perdre ses qualités mécaniques.

Lorsque la température de fusion de ladite matière thermofusible est supérieure à 100°, on réalise simultanément avec l'opération d'obturation une opération de stérilisation, qui est particulièrement importante dans le cas de paillettes contenant des produits ou substances biologiques. Par ailleurs, le fait que la matière thermofusible adhère immédiatement avec la paroi intérieure de la paillette évite les effets néfastes que pourraient créer d'éventuels dépôts polluants de surface.

A titre d'exemple, lorsque la paillette est réalisée en un chlorure de polyvinyl qui est nécessairement de qualité alimentaire compte-tenu des produits contenus dans la paillette, la matière thermofusible peut être constituée par une colle thermofusible de type connu se présentant sous forme de bâtonnet qui peut être utilisé dans des pistolets à colle; une colle constituée par un mélange de E.V.A. (copolymère éthylène- vinyl - acétate) et de polyoléfine parvient parfaitement dans ce cas.

Lors de l'introduction de la matière thermofusible dans la paillette, l'air qui se trouvait dans cette partie libre de la paillette est emprisonné et comprimé ; ce volume d'air présente l'avantage de constituer une sorte d'amortisseur et d'améliorer la fixation du produit contenu dans la paillette sans amener de détérioration ni de modification de ce dernier.

Les figures 1 et 2 représentent respectivement en position opérationnelle et en position de repos une machine permettant de mettre en oeuvre le procédé qui vient d'être décrit. Cet appareil utilise des bâtonnets de matière thermofusible et comporte un manchon réservoir cylindrique 1 pouvant contenir au moins un bâtonnet, les différents bâtonnets 2 étant placés bout à bout en alignement axial. Le manchon réservoir 1 peut par exemple être réalisé en métal. La face arrière 3 du bâtonnet ou de l'ensemble de bâtonnet 2 est soumise à une pression, qui peut par exemple être de l'ordre de 0,7 MPa (7kg/cm²), fournie par des moyens de pression qui sont, dans l'exemple représenté, constitués par un piston 4 s'engageant dans l'arrière du manchon réservoir 1 et soumis à l'action de ressorts de traction 5 dont une extrémité est solidaire du manchon-réservoir 1.

Les moyens de chauffage sont disposés au voisinage de l'extrémité ou face avant du bâtonnet ou de l'ensemble de bâtonnet de manière à amener la matière thermofusible se trouvant dans cette zone à l'état pâteux. L'appareil comporte en outre des moyens de guidage et de réception de l'extrémité à obturer de la paillette; ces moyens de guidage et de réception sont mobiles en translation parallèlement à l'axe des bâtonnet entre deux positions; dans une première position opérationnelle représentée sur la figure 2, l'extrémité de la paillette 6 est mise en communication avec l'extrémité avant du bâtonnet qui se trouve à l'état pâteux; dans une deuxième position de repos qui est représenté sur la figure 1, cette communication est interrompue.

Entre le manchon réservoir 1 et les moyens de chauffage, on prévoit avantageusement un manchon de liaison 7 qui est de préférence réalisé en une matière faiblement conductrice de la chaleur, par exemple du téflon. Ce manchon de liaison est prolongé par une pièce 8 qui présente un conduit intérieur 9 en forme d'entonnoir ou de cône qui canalise la matière thermofusible et réduit sa section. Cette pièce intermédiaire 8 constitue avantageusement un des éléments constitutifs des moyens de chauffage, à savoir une tête chauffante qui est chauffée au moyen de résistances électriques 11 qui sont noyées dans un autre manchon 12 qui constitue également le guide de soupape comme cela sera expliqué plus loin et qui est monté dans le manchon intermédiaire 8.

La communication entre la face avant 13 du bâtonnet 2 qui est amenée à l'état pâteux grace aux moyens de chauffage qui viennent d'être décrits avec l'extrémité à obturer 14 de la paillette 6 est réalisée au moyen d'une soupape 15 qui est solidaire d'une pièce 16 dans laquelle est aménagé un siège de réception 17 de l'extrémité 14 de la paillette 6. Cette pièce 16 constitue un dispositif de guidage et de réception de l'extrémité de la paillette. La soupape 15 est montée à coulissement dans le conduit central du manchon 12 portant les résistances de chauffage 11; l'extrémité 18 de la soupape 15 est en forme de pointe de manière à pouvoir pénétrer facilement dans l'extrémité 13 pâteuse du bâtonnet de matière thermofusible. Un canal axial 19 est aménagé dans la soupape 15; ce canal communique avec le siège 17 de l'extrémité de la paillette au moyen d'une buse 12 et l'autre extrémité de ce canal axial 19 débouche par une ouverture 21 dans la paroi latérale de la soupape 15. Un ressort 22 travaillant à la compression est disposé entre la pièce formant siège et le manchon 12 de manière à maintenir l'appareil dans une position de repos qui est représentée sur la figure 1.

Le fonctionnement de l'appareil qui vient d'être décrit est le suivant. Les moyens de chauffage constitués dans l'exemple représenté par les résistance 11 sont branchés en permanence de manière à ramollir l'extrémité avant du bâtonnet, ce qui permet de le canaliser dans le manchon intermédiaire 8 afin de réduire sa section. Dans la position de repos qui est représentée sur la figure 1, l'extrémité plus ou moins fluide 13 du bâtonnet 2 est bloquée par l'extrémité 18 de la soupape 15.

Pour obturer l'extrémité d'une paillette 6, on place l'extrémité à obturer 14 dans le siège 17 et on fait descendre l'ensemble de la pièce 16 et de la paillette 6 contre l'effet du ressort 22 de manière à parvenir dans la position opérationnelle représentée à la figure 2. La soupape 15 coulisse dans le manchon guide 12 et pénètre facilement du fait de sa forme pointue dans la partie en fusion de la matière thermoplastique; dans la position opérationnelle la soupape 15 est descendue suffisamment pour dégager l'ouverture 21 du manchon guide 12; de ce fait on réalise la communication entre la paillette 6 et l'extrémité 13 du bâtonnet de telle manière qu'une certaine dose de matière thermofusible pénètre dans l'extrémité 14 de la paillette. Cette dose est déterminée en particulier par la valeur de la pression exercée par le piston 4. La dose de matière thermoplastique injectée dans la paillette 6 se refroidit aussitôt après avoir réchauffé la paroi interne de la paillette et avoir adhéré à cette dernière et le bouchon d'obturation est alors terminé.

Il y a lieu de noter que la partie chaude de l'appareil est bien délimitée et éloignée de la paillette de telle manière que celle-ci ne subit que la chaleur inférieure fournie par la matière thermoplastique. En effet, l'élément chauffant est essentiellement constitué par la tête chauffante qui est séparée de la paillette par le manchon guide, la soupape et la pièce 16 portant le siège de réception de la paillette. De l'autre côté, l'isolation thermique est assurée au moyen du manchon de liaison 7 qui, en particulier lorsqu'il est réalisé en téflon, présente une grande inertie thermique si bien que la matière thermofusible se trouvant dans le manchon réservoir métallique 2 est froide et à l'état semi-rigide. On peut se rendre compte que l'appareil selon l'invention est de construction particulièrement simple, que son maniement peut être réalisé par une personne non spécialisée et qu'il n'y a qu'à exercer une pression sur la pièce 16 à l'encontre du ressort 22 pour réaliser le processus d'obturation. Cet appareil peut être totalement autonome ce qui permet une utilisation à tout endroit et en particulier dans des endroits ou l'on ne dispose pas de source d'énergie, ce qui est particulièrement important dans les activités d'élevage.

Les moyens de chauffage peuvent facilement être rendus autonomes en utilisant par exemple une pile ou une batterie électrique pour alimenter la résistance 11. Selon une variante de réalisation, les moyens de chauffage peuvent être constitués par un dispositif du type "chauffe-plat" alimenté par exemple par de l'alcool à brûler.

L'invention permet de réaliser la deuxième obturation de paillettes dont la longueur est par exemple de 133 mm, le volume pouvant varier de 0,25 à 1 cm$^3$. Comme indiqué plus haut, l'appareil décrit peut

0230388

être utilisé avec des paillettes dont le diamètre
intérieur peut atteindre 6 mm.

REVENDICATIONS

1°. Procédé d'obturation de la deuxième extrémité (14) d'une paillette (6) contenant un élément ou une substance biologique tel qu'un embryon et dont une première extrémité est obturée, caractérisé en ce que l'on injecte dans ladite extrémité (14) de la paillette (6), à l'état pâteux et sous pression, une dose de matière thermofusible présentant des propriétés adhésives avec celle constituant la paillette, ladite dose formant, en se solidifiant, un bouchon hermétique stable, notamment aux basses températures.

2°. Procédé selon la revendication 1, caractérisé en ce que dans le cas d'une paillette en chlorure de polyvinyl, on utilise comme matière thermofusible, une colle constituée par un mélange de copolymère-éthylène-vinyl-acétate et d'une polyoléfine.

3°. Appareil pour la mise en oeuvre du procédé selon la revendication 1 ou 2, caractérisé en ce qu'il comprend :

- un manchon-réservoir cylindrique destiné à recevoir un bâtonnet de matière thermofusible ou un ensemble de bâtonnets disposés en alignement axial,

- des moyens de pression (4,5) agissant sur l'extrémité arrière (3) du bâtonnet (2) ou de l'ensemble de bâtonnets;

- des moyens de chauffage (8,11) agissant sur l'extrémité avant (13) du bâtonnet (2) ou de l'ensemble de bâtonnets, et

- des moyens (7,8,12,16) de guidage et de réception de l'extrémité à obturer (14), lesdits moyens étant mobiles en translation, selon l'axe du ou des bâtonnets (2) entre deux positions, une position opérationnelle ou l'extrémité à obturer de la paillette (6) et une position de repos ou ladite communication est interrompue.

4°. Appareil selon la revendication 3, caractérisé en ce qu'il comporte un manchon de liaison (7,8) présentant un orifice de passage en forme d'entonnoir (9) disposé entre le manchon réservoir (1) et les moyens de chauffage.

5°. Appareil selon l'une des revendications 3 ou 4, caractérisé en ce qu'il comporte une soupape (15) à canal central (19) aligné avec la paillette (6) et réalisant la communication avec l'extrémité avant (13) du bâtonnet (2) lorsque l'appareil est en position opérationnelle.

6°. Appareil selon la revendication 5, caractérisé en ce que ladite soupape (15) comporte une extrémité (18) en forme de pointe pénétrant dans la face frontale (13) avant du bâtonnet (2) au niveau de l'élément chauffant et un canal axial central (19) ouvert, débouchant dans un siège (17) destiné à recevoir l'extrémité à obturer (14) de la paillette, ladite soupape (15) coulissant dans un manchon guide (12) recevant l'extrémité avant dudit bâtonnet (2) et communiquant latéralement avec le bâtonnet.

7°. Appareil selon la revendication 6, caractérisé en ce que ledit manchon guide (12) porte des moyens de chauffage (11).

8°. Appareil selon l'une quelconque des revendications 3 à 7, caractérisé en ce que les moyens de chauffage sont constitués par une résistance électrique (11).

9°. Appareil selon l'une quelconque des revendications 3 à 8, caractérisé en ce que les moyens de pression sont constitués par un piston (4) soumis à l'action d'un ressort (15).

10°. Appareil selon la revendication 6, caractérisé en ce que le canal central (19) est prolongé par une buse débouchant dans le siège de

0230388

de réception (17) de l'extrémité à obturer de la paillette.

FIG.1

FIG.2

Office européen
des brevets

**RAPPORT DE RECHERCHE EUROPEENNE**

0230388
Numéro de la demande

EP 87 40 0027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 010 447 (SIMMET)<br>* Figures 1,2; revendications 1,2,4,5 *<br><br>--- | 1 | A 61 D 7/02<br>B 29 C 57/10<br>B 29 C 45/14 |
| Y | GB-A-1 275 051 (ROBINSON)<br>* Figure 1; page 2, lignes 5-26 *<br><br>--- | 1 | |
| A | US-A-3 877 430 (WIEDER)<br><br>* Figures 1,2; résumé *<br><br>----- | | |

DOMAINES TECHNIQUES
RECHERCHES (Int. Cl.4)

A 61 M
A 61 D
B 29 C
B 65 B

Le présent rapport de recherche a été établi pour toutes les revendications

| Lieu de la recherche<br>LA HAYE | Date d'achèvement de la recherche<br>30-03-1987 | Examinateur<br>JONES T.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82